# EUROPEAN PATENT APPLICATION

(11) **EP 4 830 829 A1**
(43) Date of publication of application: **28.10.2026**
(21) Application number: 25315136.9
(22) Date of filing: 24.04.2025
(51) Int. Cl.: B01J 19/24, C10G 2/00

(54) **INTENSIFIED PROCESS FOR THE PRODUCTION OF SYNTHETIC HYDROCARBONS**

(71) Applicant: TotalEnergies OneTech, 92400 Courbevoie (FR)
(72) Inventor: Djettene, Rania, 7181 Seneffe (BE); Vandegehuchte, Bart, 7181 Seneffe (BE); Montroussier, Nicolas, 91120 PALAISEAU (FR); Bertier, Luc, 38054 GRENOBLE (FR); Lacroix, Vincent, 38054 GRENOBLE (FR)
(74) Representative: Hensenne, Peter

(57) **Abstract**

The present disclosure relates to a process for transforming CO₂ into at least one or more hydrocarbons, said process is remarkable in that it comprises the steps of (a) providing a first stream comprising H₂;(b) providing a second stream (3) comprising CO₂; (c) providing a reactor (5) comprising one or more water permeable membranes and one or more catalysts; (d) hydrogenating the second stream (3) with the first stream (1) over the one or more catalysts so as to generate an effluent comprising at least water, unreacted carbon dioxide, and one or more hydrocarbons; wherein a water removal step is carried out while performing said step (d), so as to remove a part of the water comprised into the effluent generated at step (d) and wherein the catalysts comprise one or more transition metals selected from Fe, Co, Ni, Ru and any combinations thereof.

## Description

### Field of the disclosure

The present disclosure relates to a process for transforming carbon dioxide into at least one or more hydrocarbons, in particular into one or more C8-C16 hydrocarbons.

### Technical background

Jet fuel or aviation turbine fuel is mainly composed of heavy hydrocarbons, such as C8-C16 hydrocarbons *(i.e.,* C8+ hydrocarbons) and can be notably synthesised by way of Fischer-Tropsch processes. The Fischer-Tropsch process converts syngas into hydrocarbons in the presence of metal catalysts under temperature ranging between 150°C and 300°C and under pressure. The syngas which is used in such industrial processes is a mixture of hydrogen and carbon monoxide, along with weaker quantities of carbon dioxide and methane.

Nowadays, the amount of carbon dioxide in the environment is an issue that has to be tackled. Therefore, processes have been developed to use carbon dioxide as starting materials, which is first converted into syngas and then transformed into the heavy hydrocarbons. The carbon dioxide is thus reduced with hydrogen in carbon monoxide using the reverse water gas shift reaction, often with the help of highly active transition metal catalysts such as Pt, Rh, Ni, or Cu. Improvement of the syngas production has also been achieved, for example by allowing the reverse water gas shift reaction to function without transition metal catalysts. For the production of jet fuel, the syngas which is thus produced must sill be processed within Fischer-Tropsch reactors.

WO2025/049377 describes a system for synthesis of valuable chemicals from CO₂ and hydrogen. The system comprises a catalytic membrane reactor including a plurality of channels and having an outer surface with a water permeable membrane coating. The reactor further contains a bi-functional catalyst material including an alcohol synthesis catalyst component to catalyse the reaction of CO₂ and hydrogen to form an alcohol and water and a dehydration catalyst component to catalyse the dehydration of the alcohol to form an end product such as liquefied petroleum gas (LPG) or an olefin. LPG is mainly composed of C2 and C3 alkanes. Upon formation, the water permeates through the water permeable membrane coating and exits the reactor.

There is thus a need to develop a methodology to further improve the conversion of carbon dioxide into one or more hydrocarbons, such as C4+ hydrocarbons, preferably into one or more C8+ hydrocarbons.

### Summary of the disclosure

In a first aspect, the present disclosure relates to a process for transforming carbon dioxide into at least one or more hydrocarbons, such as C4+ hydrocarbons, said process is remarkable in that it comprises the following steps:
a) providing a first stream, said first stream comprising hydrogen;
b) providing a second stream, said second stream comprising carbon dioxide;
c) providing a reactor, said reactor comprising one or more water permeable membranes and one or more catalysts;
d) hydrogenating the second stream with the first stream over the one or more catalysts provided at step (c) under reaction conditions so as to generate an effluent comprising at least water, unreacted carbon dioxide, and one or more hydrocarbons, such as C4 + hydrocarbons;
wherein a water removal step is carried out while performing said step (d), so as to remove a part of the water comprised into the effluent generated at step (d), and wherein the one or more catalysts provided with the reactor provided at step (c) comprises one or more transition metals selected from Fe, Co, Ni, Ru and any combination thereof.

With preference, the effluent generated at step (d) comprises one or more C8+ hydrocarbons.

Surprisingly, the present disclosure relates to direct transformation of carbon dioxide into one or more hydrocarbons, such as C4+ hydrocarbons or preferably into one or more C8+ hydrocarbons, such as C8-C16 or C8-C15 hydrocarbons. The carbon dioxide is directly put into contact with the hydrogen over one or more catalysts and the effluent that is generated comprises one or more hydrocarbons, such as C4+ hydrocarbons, and preferentially also heavy hydrocarbons, that could be thus recovered to generate a stream of jet fuel.

During the reverse water gas shift reaction, the water that is generated along with the carbon monoxide is in the present disclosure removed from the reaction medium, so that the concentration of carbon monoxide is increased and allows its conversion into one or more hydrocarbons, such as C4+ hydrocarbons. C5+ hydrocarbons are thus formed and also C8+ hydrocarbons, such as C8-C16 or C8-C15 hydrocarbons which are of particular interest for the generation of jet fuel, or aviation turbine fuel. The water removal step which is achieved while performing the hydrogenation of the second stream comprising carbon dioxide with the first stream comprising hydrogen allows to displace the equilibrium in favour of carbon monoxide production which is then instantly converted into one or more hydrocarbons, such as C4+ hydrocarbons, preferentially C8+ hydrocarbons such as C8-C16 or C8-C15 hydrocarbons, thanks to the presence of the one or more catalysts. To achieve the partial removal of the water which is one of the two products of the reverse water gas shit reaction, a reactor comprising at least one water permeable membrane is used. The water which is thus produced during the reaction permeates through the water permeable membrane.

The process of the present disclosure is also advantageous as only one reactor is necessary to perform such direct transformation of carbon dioxide into one or more hydrocarbons, such as C4+ hydrocarbons, preferentially one or more C8+ hydrocarbons, such as C8-C16 or C8-C15 hydrocarbons, decreasing thus the complexity of establishing a sequel of different reactors.

Advantageously, the one or more catalysts provided with the reactor provided at step (c) comprise one or more transition metals selected from Fe and/or Co. With preference, one transition metal is Fe.

Advantageously, the one or more catalysts provided with the reactor provided at step (c) further comprise one or more alkali metals.

Advantageously, the one or more catalysts provided with the reactor provided at step (c) further comprise one or more alkali earth metals.

Optionally, the one or more catalysts provided with the reactor provided at step (c) further comprise one or more noble metals.

Advantageously, the part of the water which is removed during said water removal step corresponds to between 5 wt.% and 25 wt.% of the total weight of the water comprised into the effluent generated at step (d), preferably between 7 wt.% and 23 wt.%, more preferably between 10 wt.% and 20 wt.%, even more preferably between 12 wt.% and 18 wt.%.

The effluent generated at step (d) comprises a permeate with at least water and unreacted carbon dioxide and a retentate with at least water and one or more C1-C16 hydrocarbons. Then, advantageously, the process is remarkable in that the water removal step is a gas-liquid separation step which is carried out on the permeate so as to generate a first water stream and a carbon dioxide-rich stream.

Advantageously, the process further comprises the step (e) of providing said carbon dioxide-rich stream in the hydrogenating step (d).

Advantageously, the carbon dioxide-rich stream further comprises unreacted hydrogen and carbon monoxide.

The effluent generated at step (d) comprises a permeate with at least water and unreacted carbon dioxide and a retentate with at least water and one or more C1-C16 hydrocarbons.

Then, advantageously, the process is remarkable in that a step (f) of separation is performed on said retentate to generate a C8+ hydrocarbon-rich stream, a C1-C7 hydrocarbon-rich stream and a second water stream.

With preference, said step (f) of separation is performed by cooling.

For example, the C8+ hydrocarbon-rich stream further comprises unreacted carbon dioxide and C4-C7 hydrocarbons, the process is remarkable in that it comprises a step (g) of isolation of a C8+ hydrocarbon stream from C8+ hydrocarbon-rich stream.

For example, the C8+ hydrocarbon stream comprises C8-C15 hydrocarbons or C8-C16 hydrocarbons.

With preference, said step (g) also isolates a C4-C7 hydrocarbon-rich stream.

For example, said step (g) of isolation is carried out by performing one or more distillations and optionally by performing one or more carbon dioxide adsorptions.

For example, the C1-C7 hydrocarbon-rich stream generated in step (f) is subjected to a reforming step (h) so as to provide a syngas-rich stream.

With preference, the process further comprises the step (i) of providing said syngas-rich stream in the hydrogenating step (d).

Advantageously, the step (g) also generates a stream comprising at least carbon dioxide.

With preference, the process further comprises the step (j) of subjecting said stream comprising at least carbon dioxide to the reforming step (h).

Advantageously, the step (d) is carried out at a temperature ranging between 280°C and 360°C, preferably between 290°C and 350°C, even more preferably between 300°C and 340°C.

Advantageously, the step (d) is carried out at a pressure ranging between 0.8 MPa and 3.2 MPa, preferably between 1.0 MPa and 3.0 MPa, even more preferably between 1.2 MPa and 2.8 MPa.

Advantageously, the step (d) is carried out with a gas hourly space velocity ranging between 4500 h⁻¹ and 7500 h⁻¹, preferably between 5500 h⁻¹ and 6500 h⁻¹.

Advantageously, the process comprises the step of mixing the first stream and the second stream together before performing step (d) to generate a mixture.

Advantageously, the molar ratio between the first stream and the second stream is ranging between 2.5 and 3.5, preferably between 2.6 and 3.4, more preferably between 2.7 and 3.3, even more preferably between 2.8 and 3.2.

Advantageously, the one or more water permeable membranes provided within the reactor provided at step (c) are or comprise one or more membranes selected from the group of one or more zeolitic membranes, ceramic mebranes, polymeric membranes and any mixtures thereof.

With preference, the one or more zeolites from the zeolitic membranes are selected from the group of LTA, SOD, FAU, MOR, BEA, MFI, MEL, FER families or any combination thereof.

With preference, the ceramic of the ceramic membranes is one or more ceramics selected from the group of Al₂O₃ and/or ZrO₂.

Advantageously, the ceramic membrane is supported on one or more polymers or on alpha-alumina.

With preference, the one or more polymers of the ceramic membrane supported on the one or more polymers is one or more polymers selected from the group of polysulfone, polyethersulfone, polycarbonate, polyvinylidene fluoride, polyamide, cellulose acetate, or any mixtures thereof.

With preference, a polymeric membrane is constituted of polybenzoxazole.

Advantageously, the ratio between the surface area of the one or more water permeable membranes and the mass of the one or more catalysts provided within the reactor provided at step (c) is ranging between 0.30 m²/kg and 0.50 m²/kg, preferably between 0.35 m²/kg and 0.45 m²/kg.

In a second aspect, the present disclosure relates to an use of a reactor comprising one or more water permeable membranes and one or more catalysts as a water removal unit during the transformation of carbon dioxide into at least one or more hydrocarbons, such as C4+ hydrocarbons, said transformation comprising hydrogenating a second stream comprising carbon dioxide with a first stream comprising hydrogen over the one or more catalysts, wherein the one or more catalysts provided with the reactor comprises one or more transition metals selected from Fe, Co, Ni, Ru and any combination thereof.

### Description of the figures

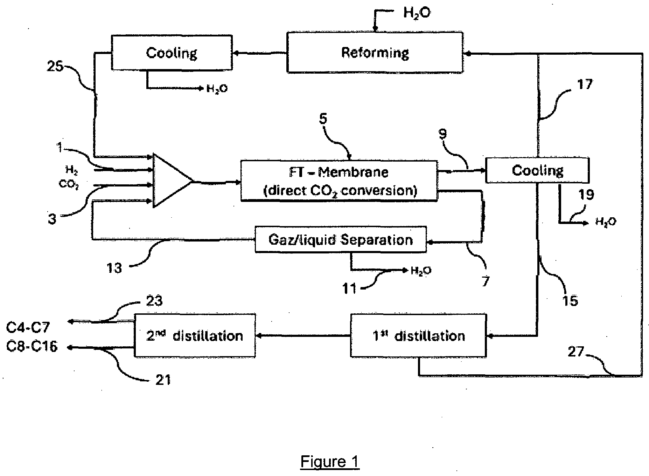

- Figure 1 schematizes the process in accordance with the present disclosure.

### Detailed description

For the disclosure, the following definitions are given:
The terms "comprising", "comprises" and "comprised of" as used herein are synonymous with "including", "includes" or "containing", "contains", and are inclusive or open-ended and do not exclude additional, non-recited members, elements, or process steps. The terms "comprising", "comprises" and "comprised of" also include the term "consisting of".

The recitation of numerical ranges by endpoints includes all integer numbers and, where appropriate, fractions subsumed within that range (e.g., 1 to 5 can include 1, 2, 3, 4, 5 when referring to, for example, a number of elements, and can also include 1.5, 2, 2.75 and 3.80, when referring to, for example, measurements). The recitation of endpoints also includes the recited endpoint values themselves (e.g., from 1.0 to 5.0 includes both 1.0 and 5.0). Any numerical range recited herein is intended to include all sub-ranges subsumed therein.

Zeolite codes (e.g., CHA...) are defined according to the *"*Atlas of Zeolite Framework Types", 6th revised edition, 2007, Elsevier, to which the present application also makes reference.

As used herein, the term "C# hydrocarbons", wherein "#" is a positive integer, is meant to describe all hydrocarbons having # carbon atoms. C# hydrocarbons are sometimes indicated as just C#. Moreover, the term "C#+ hydrocarbons" is meant to describe all hydrocarbon molecules having # or more carbon atoms. Accordingly, the expression "C4+ hydrocarbons" is meant to describe a mixture of hydrocarbons having 4 or more carbon atoms.

The symbol "=" in the term "C#= hydrocarbon" indicates that the hydrocarbon concerned is an olefin or an alkene, the notation "=" symbolizing the carbon-carbon double bond. For instance, "C6=" stands for "C6 olefin", or for "olefins comprising 6 carbon atoms".

The term "steam" is used to refer to water in the gas phase, which is formed when water boils.

The term "transition metal" refers to an element whose atom has a partially filled d sub-shell, or which can give rise to cations with an incomplete d sub-shell (IUPAC definition). According to this definition, the transition metals are Sc, Ti, V, Cr, Mn, Fe, Co, Ni, Cu, Zn, Y, Zr, Nb, Mo, Tc, Ru, Rh, Pd, Ag, Cd, La, Hf, Ta, W, Re, Os, Ir, Pt, Au, Hg, Ac, Rf, Db, Sg, Bh, Hs, Mt, Ds, Rg, and Cn.

The metals Ga, In, Sn, Tl, Pb and Bi are considered "post-transition" metals.

The metals Au, Ag, Ru, Rh, Pd, Os, Ir and Pt show outstanding oxidation resistance and are considered "noble" metals. Other metals can be considered "non-noble" metals.

The term "alkali metal" refers to an element classified as an element from group 1 of the periodic table of elements (or group IA), excluding hydrogen. According to this definition, the alkali metals are Li, Na, K, Rb, Cs and Fr.

The term "alkaline earth metal" refers to an element classified as an element from group 2 of the periodic table of elements (or group IIA). According to this definition, the alkaline earth metals are Be, Mg, Ca, Sr, Ba and Ra.

The term "rare earth elements" refer to the fifteen lanthanides, as well as scandium and yttrium. The 17 rare-earth elements are cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y).

The particular features, structures, characteristics, or embodiments may be combined in any suitable manner, as would be apparent to a person skilled in the art from this disclosure, in one or more embodiments.

As shown on figure 1, the present disclosure relates to a process for transforming carbon dioxide into at least one or more hydrocarbons, such as C4+ hydrocarbons, preferably into one or more C8+ hydrocarbons, said process is remarkable in that it comprises the following steps:
a) providing a first stream 1, said first stream 1 comprising hydrogen;
b) providing a second stream 3, said second stream 3 comprising carbon dioxide;
c) providing a reactor 5, said reactor 5 comprising one or more water permeable membranes and one or more catalysts;
d) hydrogenating the second stream 3 with the first stream 1 over the one or more catalysts provided at step (c) under reaction conditions so as to generate an effluent comprising at least water, unreacted carbon dioxide, and one or more hydrocarbons, such as C4+ hydrocarbons, and preferably one or more C8+ hydrocarbons;
wherein a water removal step is carried out while performing said step (d), so as to remove a part of the water comprised into the effluent generated at step (d), and wherein the one or more catalysts provided with the reactor 5 provided at step (c) comprises one or more transition metals selected from Fe, Co, Ni, Ru and any combinations thereof, preferably Fe and/or Co, more preferably Fe.

It has been demonstrated that using a reactor 5 comprising one or more water permeable membranes and one or more catalysts comprising one or more transition metals selected from Fe, Co, Ni, Ru and any combinations thereof as a water removal unit during the transformation of carbon dioxide into at least one or more hydrocarbons, such as C4+ hydrocarbons, said transformation comprising hydrogenating a second stream 3 comprising carbon dioxide with a first stream 1 comprising hydrogen over the one or more catalysts, allows the direct transformation of carbon dioxide into at least one or more hydrocarbons, such as C4+ hydrocarbons, without requiring the need of isolating the syngas which is formed during the reduction of the carbon dioxide by the hydrogen. Indeed, the water, which is formed during such reduction implemented by the reverse water gas shift (RWGS) reaction, can be at least partially and instantaneously withdrawn from the bulk of the reaction, and therefore, in accordance with the Le Chatelier's principle, it generates the formation of carbon monoxide from the carbon dioxide. Said carbon monoxide is directly converted into one or more hydrocarbons, such as C4+ hydrocarbons thanks to presence of the one or more catalysts comprising one or more transition metals selected from Fe, Co, Ni, Ru and any combinations thereof. Those one or more catalysts are also known as one or more Fischer-Tropsch catalysts.

Advantageously, the one or more catalysts provided with the reactor provided at step (c) further comprise one or more alkali metals, such as K and/or Na.

Advantageously, the one or more catalysts provided with the reactor provided at step (c) further comprise one or more alkali earth metals, such as Sr and/or Ba.

Optionally, the one or more catalysts provided with the reactor provided at step (c) further comprise one or more noble metals.

The part of the water which is removed during said water removal step can correspond to between 5 wt.% and 95 wt.% of the total weight of the water comprised into the effluent generated at step (d) or between 10 wt.% and 90 wt.%, or between 15 wt.% and 85 wt.%, or between 20 wt.% and 80 wt.%, or between 25 wt.% wand 75 wt.%, or between 30 wt.% and 70 wt.%, or between 35 wt.% and 65 wt.%, or between 40 wt.% and 60 wt.% or between 45 wt.% and 55 wt.%. For example, the part of the water which is removed during said water removal step can correspond to between 5 wt.% and 25 wt.% of the total weight of the water comprised into the effluent generated at step (d), preferably between 7 wt.% and 23 wt.%, more preferably between 10 wt.% and 20 wt.%, even more preferably between 12 wt.% and 18 wt.%.

Optionally, the process comprises the step of mixing the first stream 1 and the second stream 3 together before performing step (d) to generate a mixture.

Advantageously, the molar ratio between the first stream and the second stream is ranging between 2.5 and 3.5, preferably between 2.6 and 3.4, more preferably between 2.7 and 3.3, even more preferably between 2.8 and 3.2.

For example, the step (d) can be carried out at a temperature ranging between 280°C and 360°C, preferably between 285°C and 355°C, more preferably between 290°C and 350°C, even more preferably between 295°C and 345°C, most preferably between 300°C and 340°C and/or at a pressure ranging between 0.8 MPa and 3.2 MPa, preferably between 0.9 MPa and 3.1 MPa, more preferably between 1.0 MPa and 3.0 MPa, even more preferably between 1.1 MPa and 2.9 MPa, most preferably between 1.2 MPa and 2.8 MPa.

For example, the step (d) can be carried out with a gas hourly space velocity ranging between 4500 h⁻¹ and 7500 h⁻¹, preferably between 5000 h⁻¹ and 7000 h⁻¹, most preferably between 5500 h⁻¹ and 6500 h⁻¹.

The effluent generated at step (d) comprises a permeate 7 with at least water and unreacted carbon dioxide. The effluent generated at step (d) also comprises a retentate 9 with at least water and one or more C1-16 hydrocarbons or one or more C1-C15 hydrocarbons.

The retentate 9 comprises light hydrocarbons, such as methane, ethane/ethylene, propane/propene, and/or other C4-C7 hydrocarbons. The amount of methane is high, typically more than 90 wt.% based on the total weight of the C1-C7 hydrocarbons comprises within said retentate, preferably more than 95 wt.%.

The retentate also comprises C8+ hydrocarbons, such as C8-C15 hydrocarbons or C8-C16 hydrocarbons.

The amount of C1-C7 hydrocarbons within the retentate 9, which comprises both C1-C7 hydrocarbons and C8+ hydrocarbons, is ranging between 40 wt.% and 60 wt.% based on the total weight of said retentate 9, preferably between 45 wt.% and 55 wt.%.

Then, advantageously, the process can be remarkable in that the water removal step is a gas-liquid separation step which is carried out on the permeate 7 so as to generate a first water stream 11 and a carbon dioxide-rich stream 13.

For example, the carbon dioxide-rich stream 13 can also comprises hydrogen and/or carbon monoxide. For example, the ratio of carbon dioxide over the other components present in the carbon dioxide-rich stream 13, such as hydrogen and/or carbon monoxide, is ranging between 4.0 and 7.0, preferably between 4.5 and 6.5, more preferably between 5.0 and 6.0.

In addition, the process can also be remarkable in that a step (f) of separation is performed on said retentate 9 to generate a C8+ hydrocarbon-rich stream 15, a C1-C7 hydrocarbon-rich stream 17 and a second water stream 19. For example, said step (f) of separation can be performed by cooling. Such step (f) allows the separation of light hydrocarbons (C1-C7) from the heavy hydrocarbons (C8-C16, or C8-C15). For example, the cooling is performed at a temperature ranging between -45°C and +70°C, more preferably between -40°C and +65°C, even more preferably between -35°C and +60°C, most preferably between -30°C and +55°C, even most preferably between -25°C and +50°C, or between -20°C and +45°C, or between -15°C and +40°C, or between -10°C and +35°C

For example, the C1-C7 hydrocarbon-rich stream 17 generated in step (f) is subjected to a reforming step (h) so as to provide a syngas-rich stream 25. With preference, the process further comprises the step (i) of providing said syngas-rich stream 25 in the hydrogenating step (d). For example, the reforming step (j) is carried out at a temperature ranging between 700°C and 1000°C, preferably between 750°C and 950°C, more preferably between 800°C and 900°C.

Optionally, a step of cooling can be carried out after carrying out the reforming step (h), so that water can be advantageously further removed after the reforming step (h).

For example, the reforming step (j) is carried out at a pressure ranging between 1.0 MPa and 3.0 MPa, preferentially between 1.2 MPa and 2.8 MPa, more preferably between 1.4 MPa and 2.6 MPa

For example, the reforming step (h) is a steam reforming step, a dry reforming step, an autothermal reforming (ATR) step, a partial oxidation, or any combination thereof, preferentially a steam reforming step.

The process can further comprise the step (e) of providing the carbon dioxide-rich stream 13 in the hydrogenating step (d). This is advantageous as this allows to recycle the unreacted carbon dioxide.

Advantageously, the carbon dioxide-rich stream 13 can further comprise unreacted hydrogen and carbon monoxide. This is advantageous as this allows to recycling the unreacted hydrogen. The carbon monoxide that is already generated is also useful as it can be directly transform into the one or more hydrocarbons, such as C4+ hydrocarbons while performing step (d). This is like a classic Fischer-Tropsch reaction.

For example, the C8+ hydrocarbon-rich stream 15 further comprises unreacted carbon dioxide and C4-C7 hydrocarbons, and the process can be remarkable in that it comprises a step (g) of isolation of a C8+ hydrocarbon stream 21 from said C8+ hydrocarbon-rich stream 15, and also preferably a C4-C7 hydrocarbon-enriched stream 23.

The step (g) of isolation can be carried out by performing one or more distillations and optionally one or more carbon dioxide adsorptions. For example, the step (g) of isolation can be performing at least two distillations in series, as indicated by figure 1.

Thus, the process can further comprise the steps of recovering the C4-C7 hydrocarbon-enriched stream 23 and of recovering the C8+ hydrocarbon stream 21.

The C8+ hydrocarbon stream 21 can be a C8-C15 hydrocarbon stream or a C8-C16 hydrocarbon stream. It can for example comprise a mixture of C8+ alkanes and C8+ alkenes, such as C8-C13 alkanes and C8-C15 alkenes.

Advantageously, the step (g) also generates a stream 27 comprising at least carbon dioxide. With preference, the process further comprises the step (j) of subjecting said stream 27 comprising at least carbon dioxide to the reforming step (h).

Advantageously, the one or more water permeable membranes provided within the reactor provided at step (c) are or comprise one or more membranes selected from the group of one or more zeolitic membranes, ceramic membranes, polymeric membranes and any mixtures thereof.

With preference, the one or more zeolites of the zeolitic membranes are selected from the group of LTA, SOD, FAU, MOR, BEA, MFI, MEL, FER families or any combination thereof.

For example, one zeolite from the FAU family is a zeolite X and/or zeolite Y.

For example, one zeolite from the BEA family is zeolite beta.

For example, one zeolite from the MFI family is ZSM-5.

For example, one zeolite from the MEL family is ZSM-11.

For example, one zeolite from the FER family is ferrierite.

With preference, the ceramic of the one or more ceramic membrane is one or more ceramics selected from the group of Al₂O₃ and/or ZrO₂.

Advantageously, the ceramic membrane is supported on one or more polymers or on alpha-alumina.

With preference, the one or more polymers of the ceramic membrane supported on the one or more polymers is one or more polymers selected from the group of polysulfone, polyethersulfone, polycarbonate, polyvinylidene fluoride, polyamide, cellulose acetate, or any mixtures thereof.

With preference, a polymeric membrane is constituted of polybenzoxazole.

Advantageously, the ratio between the surface area of the one or more water permeable membranes and the mass of the one or more catalysts provided with the reactor 5 provided at step (c) is ranging between 0.30 m²/kg and 0.50 m²/kg, preferably between 0.35 m²/kg and 0.45 m²/kg.

### Example

The following non-limiting example illustrates the disclosure:
Table 1 summarized the experimental conditions implemented using the Prosim software.

**Table 1: Experimental conditions**

| Catalyst | KZnFeCo |
|---|---|
| Temperature | 320°C |
| Pressure | 2 MPa |
| GHSV | 6000 mL.g cat⁻¹.h⁻¹ |
| H₂/CO₂ molar ratio | 3/1 |

The conversion per pass has been determined to amount to 27.6% compared to the amount of CO₂ in the second stream 3. By comparison, starting from CO, and without using water permeable membrane, the conversion per pass is 50%.

Table 2 indicates the results that were simulated using Prosim software. The results are given in t/hour.

**Table 2: Results of the simulation of claimed process**

| | 1 | 3 | 7 | 9 | 13 | 15 | 17 | **21** | 23 | 25 |
|---|---|---|---|---|---|---|---|---|---|---|
| H₂O | | | 0.49 | 2.82 | 0.00 | 0.00 | 0.00 | **0.00** | 0.00 | 0.08 |
| H₂ | 0.54 | | 0.05 | 0.58 | 0.05 | 0.00 | 0.58 | **0.00** | 0.00 | 0.61 |
| CO₂ | | 3.91 | 0.39 | 3.04 | 0.39 | 0.01 | 3.03 | **0.00** | 0.00 | 0.44 |
| CO | | | 0.02 | 0.15 | 0.02 | 0.00 | 0.15 | **0.00** | 0.00 | 2.74 |
| C1-C7 | | | 0.00 | 1.36 | 0.00 | 0.07 | 1.29 | **0.00** | 0.56 | 1.21 |
| C8-C16 | | | 0.00 | 1.52 | 0.00 | 1.20 | 0.33 | **0.67** | 0.02 | 0.00 |

| | | | | | | | | | | |
|---|---|---|---|---|---|---|---|---|---|---|
| 1 first stream comprising hydrogen 3 second stream comprising CO₂ 7 permeate 9 retentate, comprising C1-16 hydrocarbons or C1-C15 hydrocarbons 13 CO₂-rich stream 15 C8+ hydrocarbon-rich stream 17 C1-C7 hydrocarbon-rich stream 21 C8+ hydrocarbon stream 23 C4-C7 hydrocarbon-enriched stream 25 syngas-rich stream | | | | | | | | | | |

The composition of the C4-C7 hydrocarbon-enriched stream 23 is given in table 3, based on the C4-C7 hydrocarbons which are produced at a rate of 0.56 t/hour.

**Table 3: Composition of the C4-C7 hydrocarbon-enriched stream 23**

| Compounds | wt.% (based on the total weight of C4-C7 hydrocarbons) |
|---|---|
| CH₄ | 0 |
| C₂H₆ | 0 |
| C₃H₈ | 0 |
| C₄H₁₀ | 0.05 |
| C₅H₁₂ | 2.43 |
| C₆H₁₄ | 8.09 |
| C₇H₁₆ | 8.73 |
| ethylene | 0 |
| propylene | 0 |
| 1-butene | 0.13 |
| 1-pentene | 18.47 |
| 1-hexene | 29.62 |
| 1-heptene | 32.48 |

The composition of the C8-C15 hydrocarbon stream 21 is given in table 4, based on the C8-C15 hydrocarbons which are produced at a rate of 0.67 t/hour.

**Table 4: Composition of the C8-C15 hydrocarbon stream 21**

| Compounds | wt.% (based on the total weight of C8-C15 hydrocarbons) |
|---|---|
| C₈H₁₈ | 6.78 |
| C₉H₂₀ | 6.24 |
| C₁₀H₂₂ | 3.47 |
| C₁₁H₂₄ | 3.27 |
| C₁₂H₂₆ | 2.97 |
| C₁₃H₂₈ | 1.93 |
| 1-octene | 22.67 |
| 1-nonene | 21.93 |
| 1-decene | 12.71 |
| 1-undecene | 6.99 |
| 1-dodecene | 4.70 |
| 1-tridecene | 3.18 |
| 1-tetradecene | 2.05 |
| 1-pentadecene | 1.10 |

## Claims

1. A process for transforming carbon dioxide into at least one or more hydrocarbons, said process is **characterized in that** it comprises the following steps:
a) providing a first stream (1), said first stream (1) comprising hydrogen;
b) providing a second stream (3), said second stream (3) comprising carbon dioxide;
c) providing a reactor (5), said reactor (5) comprising one or more water permeable membranes and one or more catalysts;
d) hydrogenating the second stream (3) with the first stream (1) over the one or more catalysts provided at step (c) under reaction conditions so as to generate an effluent comprising at least water, unreacted carbon dioxide, and one or more hydrocarbons;
wherein a water removal step is carried out while performing said step (d), so as to remove a part of the water comprised into the effluent generated at step (d), and wherein the one or more catalysts provided with the reactor (5) provided at step (c) comprises one or more transition metals selected from Fe, Co, Ni, Ru and any combination thereof.

2. Process according to claim 1, wherein the effluent generated at step (d) comprises a permeate (7) with at least water and unreacted carbon dioxide and a retentate (9) with at least water and one or more C1-C16 hydrocarbons, the process is **characterized in that** the water removal step is a gas-liquid separation step which is carried out on the permeate (7) so as to generate a first water stream (11) and a carbon dioxide-rich stream (13).

3. Process according to claim 2, **characterized in that** the process further comprises the step (e) of providing said carbon dioxide-rich stream (13) in the hydrogenating step (d) **and/or in that** the carbon dioxide-rich stream (13) further comprises unreacted hydrogen and carbon monoxide.

4. Process according to any one of claims 1 to 3, **characterized in that** the part of the water which is removed during said water removal step corresponds to between 5 wt.% and 25 wt.% of the total weight of the water comprised into the effluent generated at step (d), preferably between 10 wt.% and 20 wt.%.

5. Process according to any one of claims 1 to 4, wherein the effluent generated at step (d) comprises a permeate (7) with at least water and unreacted carbon dioxide and a retentate (9) with at least water and one or more C1-C16 hydrocarbons, the process is **characterized in that** a step (f) of separation is performed on said retentate (9) to generate a C8+ hydrocarbon-rich stream (15), C1-C7 hydrocarbon-rich stream (17) and a second water stream (19); with preference, said step (f) of separation is performed by cooling.

6. Process according to claim 5, wherein the C8+ hydrocarbon-rich stream (15) further comprises unreacted carbon dioxide and C4-C7 hydrocarbons, the process is **characterized in that** it comprises a step (g) of isolation of a C8+ hydrocarbon stream (21) from said C8+ hydrocarbon-rich stream (15); with preference, said step (g) also isolates a C4-C7 hydrocarbon-enriched stream (23).

7. Process according to claim 6, **characterized in that** said step (g) of isolation is carried out by performing one or more distillations and optionally by performing one or more carbon dioxide adsorptions.

8. Process according to any one of claims 5 to 7, **characterized in that** the C1-C7 hydrocarbon-rich stream (17) generated in step (f) is subjected to a reforming step (h) so as to provide a syngas-rich stream (25); with preference, the process further comprises the step (i) of providing said syngas-rich stream (25) in the hydrogenating step (d).

9. Process according any one of claims 6 to 8, **characterized in that** the step (g) also generates a stream (27) comprising at least carbon dioxide; with preference, the process further comprises the step (j) of subjecting said stream (27) comprising at least carbon dioxide to the reforming step (h).

10. Process according to any one of claims 1 to 9, **characterized in that** one or more of the following reaction conditions of step (d) is true:
- the step (d) is carried out at a temperature ranging between 280°C and 360°C;
- the step (d) is carried out at a pressure ranging between 0.8 MPa and 3.2 MPa;
- the step (d) is carried out with a gas hourly space velocity ranging between 4500 h⁻¹ and 7500 h⁻¹.

11. Process according to any one of claims 1 to 10, **characterized in that** the process comprises the step of mixing the first stream (1) and the second stream (3) together before performing step (d) to generate a mixture; **and/or in that** the molar ratio between the first stream (1) and the second stream (3) is ranging between 2.5 and 3.5.

12. Process according to any one of claims 1 to 11, **characterized in that** the one or more water permeable membranes provided within the reactor (5) provided at step (c) are or comprise one or more membranes selected from the group of one or more zeolitic membranes, ceramic membrane, polymeric membrane and any mixtures thereof.

13. Process according to any one of claims 1 to 12, **characterized in that** the one or more catalysts provided with the reactor (5) provided at step (c) comprises one or more transition metals selected from Fe and/or Co, and/or **in that** the one or more catalysts provided with the reactor (5) provided at step (c) further comprise one or more alkali metals and/or one or more alkali earth metals, and optionally one or more noble metals.

14. Process according to any one of claims 1 to 13, **characterized in that** the ratio between the surface area of the one or more water permeable membranes and the mass of the one or more catalysts provided with the reactor (5) provided at step (c) is ranging between 0.3 m²/kg and 0.5 m²/kg.

15. Use of a reactor (5) comprising one or more water permeable membranes and one or more catalysts as a water removal unit during the transformation of carbon dioxide into at least one or more hydrocarbons, said transformation comprising hydrogenating a second stream (3) comprising carbon dioxide with a first stream (1) comprising hydrogen over the one or more catalysts, wherein the one or more catalysts provided with the reactor (5) comprises one or more transition metals selected from Fe, Co, Ni, Ru and any combination thereof.
